# EUROPÄISCHE PATENTSCHRIFT

(11) **EP 3 907 110 B1**
(45) Veröffentlichungstag und Bekanntmachung des Hinweises auf die Patenterteilung: **10.09.2025**
(21) Anmeldenummer: 21166502.1
(22) Anmeldetag: 01.04.2021
(51) Int. Cl.: B60R 16/03, H02J 7/14

(54) **VERFAHREN ZUM BETREIBEN EINESBORDSPANNUNGSSYSTEMS FÜR EIN FAHRZEUG**
PROCESS FOR OPERATING AN ON-BOARD ELECTRICAL SYSTEM FOR A VEHICLE
PROCÉDÉ POUR FAIRE FONCTIONNER UN SYSTÈME ÉLECTRIQUE EMBARQUÉ POUR UN VÉHICULE

(30) Priorität: 05.05.2020 DE 102020112074
(43) Veröffentlichungstag der Anmeldung: 10.11.2021
(73) Patentinhaber: Eberspächer Controls Landau GmbH & Co. KG, 76829 Landau (DE)
(72) Erfinder: Wandres, Steffen, 76870 Kandel (DE)
(74) Vertreter: Ruttensperger Lachnit Trossin Gomoll

(56) Entgegenhaltungen:
- EP-A1- 4 164 924
- EP-A2- 0 800 254
- WO-A1-2008/014944
- WO-A1-2012/156028
- WO-A1-2016/045836
- WO-A1-2021/249799
- DE-A1- 102013 003 586
- DE-A1- 102015 108 372
- DE-A1- 102015 222 545
- DE-B3- 102018 216 491

## Beschreibung

In Bordspannungssystemen von Fahrzeugen existieren Bereiche der Hauptstrompfade, welche hinsichtlich des Auftretens von Kurzschlüssen kritisch bzw. anfällig sind. Tritt in einem derartigen kurzschlussrelevanten Systembereich, beispielsweise bei einem Unfall, ein Kurzschluss auf, kann dies dazu führen, dass im gesamten Bordnetz die Versorgungsspannung unter einen kritischen Wert fällt und Komponenten oder Systembereiche, die auch in diesem Zustand noch zu betreiben sind, wie z. B. ein Antiblockiersystem, eine Getriebesteuerung oder eine elektrische Lenkung, nicht mehr betrieben werden können.

Aus der DE 10 2013 003 586 A1 ist ein einen Generator enthaltender Systembereich eines Bordspannungssystems über ein beispielsweise als MOSFET ausgebildetes Schaltelement mit einem Bordnetz und über dieses mit einer Mehrzahl von Verbrauchern elektrischer Energie und einer Bordnetzbatterie verbunden. Den Verbrauchern elektrischer Energie und der Bordnetzbatterie sind Sicherungen zugeordnet, um im Falle des Auftretens eines Kurzschlusses bei einem der Verbraucher elektrischer Energie oder im Bereich der Bordnetzbatterie denjenigen dieser Systembereiche, in welchem der Kurzschluss aufgetreten ist, vom verbleibenden System abzukoppeln.

Bei einem aus der WO 2012/156028 A1 Bordspannungssystem ist zwischen einem eine Bordnetzbatterie und einen Starter enthaltenden Systembereich des Bordspannungssystems und dem einen Generator und einen DC/DC-Wandler sowie eine Mehrzahl von Verbrauchern elektrischer Energie enthaltenden Systembereich des Bordspannungssystems ein als MOSFET ausgebildetes Schaltelement angeordnet. Bei Auftreten eines Start-Stopp-Befehls wird abhängig von einer Spannungsdifferenz zwischen einem Eingangsanschluss und einem Ausgangsanschluss des Schaltelements dann, wenn diese Spannungsdifferenz auf das Vorliegen eines Fehlerzustandes in einem der Systembereiche hindeutet, der Start-Stopp-Befehl nicht ausgeführt. Liegt die Spannungsdifferenz im erwarteten Wertebereich, wird bei geöffnetem, also nicht leitendem Schaltelement, der Start-Stopp-Befehl ausgeführt.

Bei einem aus der WO 2021/249799 A1 (Stand der Technik gemäß Art. 54(3) EPÜ) bekannten Bordspannungsnetz ist in Zuordnung zu einem eine Bordnetzbatterie umfassenden kurzschlussrelevanten Systembereich und in Zuordnung zu einem eine Gleichspannungsquelle in Form eines DC/DC-Wandlers umfassenden kurzschlussrelevanten Systembereich jeweils eine einen MOSFET umfassende Kurzschluss-Trennanordnung vorgesehen.

Es ist die Aufgabe der vorliegenden Erfindung, ein Verfahren zum Betreiben eines derartigen Bordspannungssystems vorzusehen, welche auch bei Auftreten eines Kurzschlusses eine Funktionsfähigkeit insbesondere sicherheitsrelevanter Systembereiche eines Fahrzeugs gewährleisten.

Gemäß der vorliegenden Erfindung wird diese Aufgabe gelöst durch ein Verfahren zum Betreiben eines Bordspannungssystems gemäß Anspruch 1.

Bei diesem Verfahren wird dann, wenn im Bereich eines wenigstens eine Bordnetzbatterie umfassenden kurzschlussrelevanten Systembereichs ein Kurzschluss auftritt, die diesem zugeordnete Kurzschluss-Trennanordnung in einen diesen kurzschlussrelevanten Systembereich von dem Bordnetz trennenden Trennzustand geschaltet oder in dem Trennzustand gehalten.

Das mit dem erfindungsgemäßen Verfahren zu betreibende Bordspannungssystem für ein Fahrzeug umfasst:
- ein Bordnetz mit einer Mehrzahl von Verbrauchern elektrischer Energie,
- wenigstens eine Bordnetzbatterie,
- wenigstens eine Kurzschluss-Trennanordnung zum Trennen eines kurzschlussrelevanten Systembereichs von dem Bordnetz bei Auftreten eines Kurzschlusses im Bereich des kurzschlussrelevanten Systembereichs.

Die Kurzschluss-Trennanordnung ermöglicht es, bei Auftreten eines Kurzschlusses einen durch die Kurzschluss-Trennanordnung abgesicherten kurzschlussrelevanten Systembereich, also einen Systembereich, welcher beispielsweise im Falle eines Unfalls der potentiellen Gefahr des Auftretens eines Kurzschlusses unterliegt, vom Bordnetz derart zu trennen, dass ein den zumindest teilweise fortgesetzten Betrieb von beispielsweise sicherheitsrelevanten Systembereichen eines Fahrzeugs nicht mehr zulassender Spannungseinbruch im Bordnetz vermieden wird.

Die wenigstens eine Kurzschluss-Trennanordnung umfasst wenigstens ein MOSFET-Schaltelement, wobei das wenigstens eine MOSFET-Schaltelement einen Eingangsanschluss und einen Ausgangsanschluss aufweist und in einem Geschlossen-Zustand eine Leitungsverbindung zwischen dem Eingangsanschluss und dem Ausgangsanschluss aufweist und in einem Offen-Zustand als Diode in Richtung vom Ausgangsanschluss zum Eingangsanschluss sperrend wirkt.

Um dabei die Sperrwirkung eines derartigen MOSFET-Schaltelements für den Fall des Auftretens eines Kurzschlusses in einem kurzschlussrelevanten Systembereich nutzen zu können, weist der wenigstens eine kurzschlussrelevante Systembereich einen Systembereich-Ausgangsanschluss auf, und der Systembereich-Ausgangsanschluss ist an den Eingangsanschluss des wenigstens einen MOSFET-Schaltelements einer Kurzschluss-Trennanordnung angeschlossen.

Da das Bordnetz an den Ausgangsanschluss des wenigstens einen MOSFET-Schaltelements angeschlossen ist, wird durch das Ausnutzen der Sperrwirkung des wenigstens einen MOSFET-Schaltelements bei Auftreten eines Kurzschlusses auf der Seite des Eingangsanschlusses des wenigstens einen MOSFET-Schaltelements ein Spannungseinbruch auf der Seite des Bordnetzes zuverlässig vermieden.

Ein weiterer kurzschlussrelevanter Systembereich kann beispielsweise eine Gleichspannungsquelle, vorzugsweise DC/DC-Wandler oder Generator, umfassen, durch welche bei vorhandener Funktionalität das Bordnetz mit elektrischer Energie versorgt werden kann bzw. auch eine Bordnetzbatterie aufgeladen werden kann.

Da auch im Bereich einer Bordnetzbatterie ein Kurzschluss auftreten kann, umfasst bei dem mit dem erfindungsgemäßen Verfahren zu betreibenden Bordspannungssystem der wenigstens eine kurzschlussrelevante Systembereich die wenigstens eine Bordnetzbatterie, und ein Bordnetzbatterie-Ausgangsanschluss ist an den Eingangsanschluss des wenigstens einen MOSFET-Schaltelements einer Kurzschluss-Trennanordnung angeschlossen und das Bordnetz ist an den Ausgangsanschluss des wenigstens einen MOSFET-Schaltelements angeschlossen. Somit ist durch das wenigstens eine MOSFET-Schaltelement der einer derartigen Bordnetzbatterie zugeordneten Kurzschluss-Trennanordnung gewährleistet, dass ein im Bereich einer derartigen Bordnetzbatterie auftretender Kurzschluss nicht zu einem Spannungseinbruch im gesamten Bordnetz führen kann.

Um auch in diesem Falle, also bei Auftreten eines Kurzschlusses einer diesbezüglich durch eine Kurzschluss-Trennanordnung abgesicherten Bordnetzbatterie, zumindest einen Teil der in dem Bordnetz mit elektrischer Energie zu speisenden Systembereiche weiter betreiben zu können, ist das Bordnetz an einen Ausgangsanschluss einer Gleichspannungsquelle, vorzugsweise DC/DC-Wandler oder Generator, angeschlossen.

Da ein durch eine Kurzschluss-Trennanordnung abgesicherter kurzschlussrelevanter Systembereich durch wenigstens eine Bordnetzbatterie bereitgestellt ist, kann das Aufladen der Bordnetzbatterie dadurch gewährleistet werden, dass dann, wenn ein Ladestrom zu der wenigstens einen Bordnetzbatterie unter der einen insbesondere im Ladezustand maximal zulässigen Strom repräsentierenden Stromschwelle liegt, das wenigstens eine MOSFET-Schaltelement in seinen Geschlossen-Zustand geschaltet wird oder in seinem Geschlossen-Zustand gehalten wird, und dann, wenn der Ladestrom die Stromschwelle übersteigt, in seinen Offen-Zustand geschaltet wird.

Die vorliegende Erfindung wird nachfolgend mit Bezug auf die beiliegenden Figuren detailliert beschrieben. Es zeigt:
- Fig. 1: in prinzipartiger Darstellung ein Bordspannungssystem gemäß einer ersten Ausgestaltungsform;
- Fig. 2: eine der Fig. 1 entsprechende Darstellung eines Bordspannungssystems gemäß einer zweiten Ausgestaltungsform.

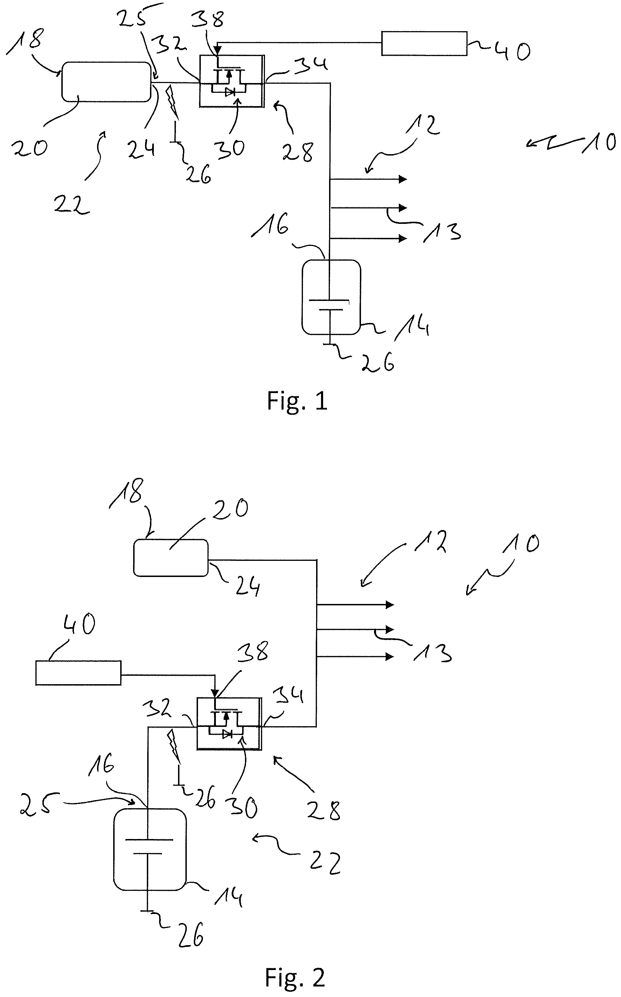

In Fig. 1 ist ein Bordspannungssystem für ein Fahrzeug allgemein mit 10 bezeichnet. Das Bordspannungssystem 10 umfasst ein Bordnetz 12, das eine Mehrzahl von durch Pfeile gekennzeichneten elektrischen Verbrauchern 13 in einem Fahrzeug umfasst. Das Bordspannungssystem 10 umfasst ferner eine Bordnetzbatterie 14, deren im Sinne der vorliegenden Erfindung als Bordnetzbatterie-Ausgangsanschluss 16 zu betrachtender Pluspol mit dem Bordnetz 12 verbunden ist, um die im Bordnetz 12 vorhandenen Verbraucher elektrischer Energie aus der Bordnetzbatterie 14 mit elektrischer Energie zu speisen. Der Minuspol der Bordnetz Batterie 14 kann an das Massepotenzial 26 des Fahrzeugs angeschlossen sein bzw. dieses definieren.

Das Bordspannungssystem 10 umfasst ferner als ein Beispiel einer in einem Fahrzeug vorgesehenen Gleichspannungsquelle 18 einen DC/DC-Wandler (Gleichstrom/Gleichstrom-Wandler) 20.

In dem in Fig. 1 dargestellten Ausgestaltungsbeispiel eines Bordspannungssystems 10 stellt der DC/DC-Wandler 20 einen kurzschlussrelevanten Systembereich 22 dar bzw. ist in einem derartigen kurzschlussrelevanten Systembereich des Fahrzeugs angeordnet. Bei Auftreten eines internen Fehlers in dem DC/DC-Wandler 20 oder im Falle eines Unfalls besteht die Möglichkeit, dass über einen Ausgangsanschluss 24 des einen kurzschlussrelevanten Systembereich 22 bereitstellenden DC/DC-Wandlers 20 ein Kurzschluss zum Massepotential 26 hergestellt wird. Wäre der Ausgangsanschluss 24 des DC/DC-Wandlers 20, welcher in dieser Ausgestaltung des Bordnetzsystems 10 einen Systembereich-Ausgangsanschluss 25 des kurzschlussrelevanten Systembereichs 22 bildet, mit dem Bordnetz 12 und auch mit dem Bordnetzbatterie-Ausgangsanschluss 16 verbunden, würde das Auftreten eines derartigen Kurzschlusses im Bereich des DC/DC-Wandlers 20 zu einem Spannungseinbruch im Bordnetz 12 führen, da auch der Bordnetzbatterie-Ausgangsanschluss 16 mit dem Massepotential 26 verbunden wäre.

Um diesem Problem entgegenzutreten, ist bei dem Bordspannungssystem 10 eine allgemein mit 28 bezeichnete Kurzschluss-Trennanordnung vorgesehen. Diese kann z.B. als unter der Handelsbezeichnung Q-Diode (Quasi-Diode) bekannter bzw. vertriebener Trennschalter ausgebildet sein und ein, vorzugsweise eine Mehrzahl von zueinander parallel geschalteten MOSFET-Schaltelementen 30 umfassen. Der Source-Anschluss des bzw. jedes derartigen MOSFET-Schaltelements 30 ist mit einem Eingangsanschluss 32 dieser Kurzschluss-Trennanordnung 28 verbunden bzw. stellt diesen bereit. Der Drain-Anschluss des bzw. jedes MOSFET-Schaltelements 30 ist an den Ausgangsanschluss 34 dieser Kurzschluss-Trennanordnung 28 angeschlossen bzw. stellt diesen bereit. Über einen Gate-Anschluss 38 bzw. eine durch eine Ansteueranordnung 40 an diesen angelegte Spannung kann das bzw. jedes MOSFET-Schaltelement 30 der Kurzschluss-Trennanordnung 28 zwischen einem Geschlossen-Zustand und einem Offen-Zustand umgeschaltet werden. Beispielsweise kann bei anliegender Gate-Spannung das bzw. jedes MOSFET-Schaltelement 30 bzw. die Kurzschluss-Trennanordnung 28 in ihrem Geschlossen-Zustand sein, in welchem eine leitende Verbindung zwischen dem Eingangsanschluss 32 und dem Ausgangsanschluss 34 in jeder der beiden möglichen Stromflussrichtungen besteht. Bei nicht anliegender Gate-Spannung ist das bzw. jedes MOSFET-Schaltelement 30 und damit die Kurzschluss-Trennanordnung 28 in ihrem Offen-Zustand, in welchem diese die Funktionalität einer Diode hat, die in Richtung vom Ausgangsanschluss 34 zum Eingangsanschluss 32 sperrend wirkt, jedoch einen Stromfluss von Eingangsanschluss 32 zum Ausgangsanschluss 34 zulässt.

Bei korrekter Funktionalität des Bordspannungssystems 10 und nicht vorhandenem Kurzschluss in dem durch die Kurzschluss-Trennanordnung 28 abgesicherten kurzschlussrelevanten Systembereich 22, also im Bereich des DC/DC-Wandlers 20, kann dieser unabhängig davon, ob eine Gate-Spannung anliegt oder nicht, das Bordnetz 12 mit elektrischer Energie speisen bzw. auch einen Ladestrom für die Bordnetzbatterie 14 bereitstellen. Grundsätzlich könnte in einem derartigen normalen Betriebszustand die Kurzschluss-Trennanordnung 28 bzw. deren MOSFET-Schaltelement/e 30 in den Geschlossen-Zustand geschaltet sein. Soll ein Entladen der Bordnetzbatterie 14 in Richtung zum DC/DC-Wandler 20 vermieden werden, kann die Kurzschluss-Trennanordnung 28 in ihrem Offen-Zustand gehalten werden.

Tritt im Bereich des DC/DC-Wandlers 20, also an der Seite des Eingangsanschlusses 32 der Kurzschluss-Trennanordnung 28 bzw. der MOSFET-Schaltelemente 30 derselben, ein Kurzschluss zum Massepotential 26 auf, sperrt die Kurzschluss-Trennanordnung 28 aufgrund der Diode-Funktionalität des bzw. der MOSFET-Schaltelemente 30 einen Stromfluss in Richtung zum DC/DC-Wandler, so dass dieser vom Bordnetz 12 bzw. der Bordnetzbatterie 14 entkoppelt ist und das Bordnetz 12 nach wie vor zuverlässig aus der Bordnetzbatterie 14 gespeist werden kann. Es kann in diesem Zustand dann zumindest ein Notbetrieb für sicherheitsrelevante Systembereiche eines Fahrzeugs, wie z. B. das Antiblockiersystem, die Getriebesteuerung oder eine elektrische Lenkung, aufrechterhalten werden. War die Kurzschluss-Trennanordnung 28 zuvor im Geschlossen-Zustand, so kann bei Erfassen eines übermäßig großen Stromflusses im Bereich des DC/DC-Wandlers, was auf das Auftreten eines Kurzschlusses hindeutet, die Kurzschluss-Trennanordnung 28 in ihren Offen-Zustand geschaltet werden, so dass die Entkopplung des Bordnetzes 12 und der Bordnetzbatterie 14 von demjenigen Bereich, in welchem ein Kurzschluss aufgetreten ist, gewährleistet wird.

Insbesondere derartige als Q-Dioden bekannte Trennschalter reagieren außerordentlich schnell auf das Auftreten eines derartigen Stromflusses und sperren in weniger als 100 µs den Stromfluss vom Bordnetz 12 bzw. der Bordnetzbatterie 14 in Richtung zu dem kurzschlussrelevanten Systembereich 22.

Bei der in Fig. 2 dargestellten Ausgestaltungsform stellt die Bordnetzbatterie 14 den kurzschlussrelevanten Systembereich 22 eines Fahrzeugs dar. Daher ist bei dieser Ausgestaltungsform der Bordnetzbatterie-Ausgangsanschluss 16, also der Pluspol der Bordnetzbatterie 14, an den Eingangsanschluss 32 der Kurzschluss-Trennanordnung 28 bzw. des bzw. der MOSFET-Schaltelemente 30 derselben angeschlossen, während das Bordnetz 12 an den Ausgangsanschluss 34 der Kurzschluss-Trennanordnung 28 angeschlossen ist. Ferner kann bei dieser Ausgestaltungsform der Ausgangsanschluss 24 des als Gleichspannungsquelle 28 arbeitenden DC/DC-Wandlers 20 mit dem Bordnetz 12 verbunden sein, so dass auch bei dieser Ausgestaltungsform eines Bordspannungssystems 12 das Bordnetz 12 sowohl von der Bordnetzbatterie 14, als auch von DC/DC-Wandler 20 gespeist werden kann.

Tritt im Bereich der Bordnetzbatterie 14 ein Kurzschluss zum Massepotential 26 auf, so sperrt die Kurzschluss-Trennanordnung 28 unverzüglich und verhindert einen Stromfluss vom DC/DC-Wandler 20 zur Bordnetzbatterie 14, so dass dieser nach wie vor das Bordnetz 12 mit elektrischer Energie speisen kann und ein Spannungseinbruch im Bereich des Bordnetzes 12 verhindert wird.

Da auch bei der in Fig. 2 dargestellten Ausgestaltungsform die Batterie 14 über dem als Gleichspannungsquelle 18 wirkenden DC/DC-Wandler 20 oder einen sonstigen Generator, welcher an das Bordnetz 12 angeschlossen sein kann, zu laden ist, muss dafür gesorgt werden, dass bei korrekter Funktionalität die Kurzschluss-Trennanordnung 28 einen Stromfluss zum Ausgangsanschluss 16, also zum Pluspol, der Bordnetzbatterie 14 zulässt, so dass durch einen derartigen Ladestrom die Bordnetzbatterie 14 geladen werden kann. Hierfür wird vermittels der Ansteueranordnung 40 eine entsprechende Gate-Spannung an den Gate-Anschluss 38 bzw. die Gate-Anschlüsse 38 des bzw. der MOSFET-Schaltelemente 30 dieser Kurzschluss-Trennanordnung 28 angelegt, um diese in den Geschlossen-Zustand zu schalten. Tritt ein Kurzschluss auf, was einen unmittelbaren Anstieg des Ladestroms zur Folge hätte, übersteigt der Ladestrom eine diesem zugeordnete Stromschwelle beispielsweise im Bereich von 50 A. Im Falle eines derartigen Kurzschlusses kann der Kurzschlussstrom mehrere 100 A betragen. Dies wird durch die Überwachung des Ladestroms zur Bordnetzbatterie 14 erkannt und bei Überschreiten der Stromschwelle wird die Kurzschluss-Trennanordnung 28 in ihren Offen-Zustand geschaltet, so dass ein fortgesetzter Stromfluss in Richtung zur Bordnetzbatterie 14 bzw. demjenigen Bereich, in welchem ein Kurzschluss aufgetreten ist, verhindert ist und das Bordnetz 12 weiterhin von der Gleichspannungsquelle 18 bzw. dem DC/DC-Wandler 20 weiter gespeist werden kann.

Durch die vorliegende Erfindung ist mit baulichen einfachen Mitteln die Möglichkeit geschaffen, zuverlässig einen Systembereich abzukoppeln, welcher potentiell der Gefahr des Auftretens eines Kurzschlusses unterliegt, wenn ein derartiger Kurzschluss auftritt. Die in einem Bordnetz mit elektrischer Energie zu speisenden Systembereiche können nach wie vor versorgt werden, ohne dass die Gefahr eines Spannungseinbruchs besteht.

Es ist darauf hinzuweisen, dass in einem Fahrzeug bzw. einem Bordnetzsystem mehrere hinsichtlich des Auftretens eines Kurzschlusses potentiell risikoreiche Systembereiche durch eine derartige Kurzschluss-Trennanordnung abgesichert werden können. Beispielsweise könnte sowohl in Zuordnung zur Bordnetzbatterie, als auch in Zuordnung zu einer beispielsweise einen DC/DC-Wandler umfassenden Gleichspannungsquelle eine derartige Kurzschluss-Trennanordnung vorgesehen sein. Auch können mehrere Bordnetzbatterien vorgesehen sein, wobei in Zuordnung zu allen derartigen Bordnetzbatterien gemeinsam oder zu jeder einzeln oder zu einem Teil davon jeweils eine derartige Kurzschluss-Trennanordnung mit der vorangehend beschriebenen Funktionalität vorgesehen sein kann.

## Patentansprüche

1. Verfahren zum Betreiben eines Bordspannungssystems für ein Fahrzeug, das Bordspannungssystem umfassend:
- ein Bordnetz (12) mit einer Mehrzahl von Verbrauchern elektrischer Energie,
- wenigstens eine Bordnetzbatterie (14),
- wenigstens eine Kurzschluss-Trennanordnung (28) zum Trennen eines kurzschlussrelevanten Systembereichs (22) von dem Bordnetz (12) bei Auftreten eines Kurzschlusses im Bereich des kurzschlussrelevanten Systembereichs (22),
wobei die wenigstens eine Kurzschluss-Trennanordnung (28) wenigstens ein MOSFET-Schaltelement (30) umfasst, wobei das wenigstens eine MOSFET-Schaltelement (30) einen Eingangsanschluss (32) und einen Ausgangsanschluss (34) aufweist und in einem Geschlossen-Zustand eine Leitungsverbindung zwischen dem Eingangsanschluss (32) und dem Ausgangsanschluss (34) aufweist und in einem Offen-Zustand als Diode in Richtung vom Ausgangsanschluss (34) zum Eingangsanschluss (32) sperrend wirkt,
wobei der wenigstens eine kurzschlussrelevante Systembereich (22) einen Systembereich-Ausgangsanschluss (25) aufweist und der Systembereich-Ausgangsanschluss (25) an den Eingangsanschluss (32) des wenigstens einen MOSFET-Schaltelements (30) einer Kurzschluss-Trennanordnung (28) angeschlossen ist,
wobei ein kurzschlussrelevanter Systembereich (22) die wenigstens eine Bordnetzbatterie (14) umfasst, wobei ein Bordnetzbatterie-Ausgangsanschluss (16) einen Systembereich-Ausgangsanschluss (25) des die wenigstens eine Bordnetzbatterie (14) umfassenden kurzschlussrelevanten Systembereichs (22) bereitstellt und an den Eingangsanschluss (32) des wenigstens einen MOSFET-Schaltelements (30) einer in Zuordnung zu dem die wenigstens eine Bordnetzbatterie (14) umfassenden kurzschlussrelevanten Systembereich (22) vorgesehenen Kurzschluss-Trennanordnung (28) angeschlossen ist,
wobei das Bordnetz (12) an den Ausgangsanschluss (34) des wenigstens einen MOSFET-Schaltelements (30) der in Zuordnung zu dem die wenigstens eine Bordnetzbatterie (14) umfassenden kurzschlussrelevanten Systembereich (22) vorgesehenen Kurzschluss-Trennanordnung (28) angeschlossen ist,
wobei das Bordnetz (12) an einen Ausgangsanschluss (24) einer Gleichspannungsquelle (18) angeschlossen ist,
bei welchem Verfahren:
- dann, wenn im Bereich des die wenigstens eine Bordnetzbatterie (14) umfassenden kurzschlussrelevanten Systembereichs (22) ein Kurzschluss auftritt, die in Zuordnung zu dem die wenigstens eine Bordnetzbatterie (14) umfassenden kurzschlussrelevanten Systembereich (22) vorgesehene Kurzschluss-Trennanordnung (28) in einen den die wenigstens eine Bordnetzbatterie (14) umfassenden kurzschlussrelevanten Systembereich (22) von dem Bordnetz (12) trennenden Trennzustand geschaltet wird oder in dem Trennzustand ist,
- zum Laden der wenigstens einen Bordnetzbatterie (14) vermittels der Gleichspannungsquelle das wenigstens eine MOSFET-Schaltelement (30) der in Zuordnung zu dem die wenigstens eine Bordnetzbatterie (14) umfassenden kurzschlussrelevanten Systembereich (22) vorgesehenen Kurzschluss-Trennanordnung (28) in seinen Geschlossen-Zustand geschaltet wird,
- dann, wenn ein Ladestrom zu der wenigstens einen Bordnetzbatterie (14) unter der Stromschwelle liegt, das wenigstens eine MOSFET-Schaltelement (30) der in Zuordnung zu dem die wenigstens eine Bordnetzbatterie (14) umfassenden kurzschlussrelevanten Systembereich (22) vorgesehenen Kurzschluss-Trennanordnung (28) in seinem Geschlossen-Zustand gehalten wird, und dann, wenn der Ladestrom die Stromschwelle übersteigt, in seinen Offen-Zustand geschaltet wird.

2. Verfahren nach Anspruch 1, **dadurch gekennzeichnet, dass** ein weiterer kurzschlussrelevanter Systembereich (22) die Gleichspannungsquelle (18) umfasst.

3. Verfahren nach Anspruch 1 oder 2, **dadurch gekennzeichnet, dass** die Gleichspannungsquelle (18) einen DC/DC-Wandler (20) oder Generator umfasst.

## Claims

1. Process for operating an on-board electrical system for a vehicle, the on-board electrical system comprising:
- an on-board power supply system (12) with a plurality of electrical energy consumers,
- at least one on-board power supply system battery (14),
- at least one short circuit breaking device (28) for disconnecting a short circuit-relevant system area (22) from the on-board power supply system (12) when a short circuit occurs in the area of the short circuit-relevant system area (22),
wherein the at least one short circuit breaking device (28) comprises at least one MOSFET circuit component (30), wherein the at least one MOSFET circuit component (30) has an input terminal (32) and an output terminal (34) and has a line connection between the input terminal (32) and the output terminal (34) in a closed state and has a blocking effect in the direction from the output terminal (34) to the input terminal (32) as a diode in an open state,
wherein the at least one short circuit-relevant system area (22) has a system area output terminal (25), and the system area output terminal (25) is connected to the input terminal (32) of the at least one MOSFET circuit component (30) of a short circuit breaking device (28),
wherein a short circuit-relevant system area (22) comprises the at least one on-board power supply system battery (14), wherein an on-board power supply system battery output terminal (16) provides a system area output terminal (25) of the short circuit-relevant system area (22) comprising the at least one supply system battery (14) and is connected to the input terminal (32) of the at least one MOSFET circuit component (30) of a short circuit breaking device (28) provided in association to the short circuit-relevant system area (22) comprising the at least one on-board power supply system battery (14),
wherein the on-board power supply system (12) is connected to the output terminal (34) of the at least one MOSFET circuit component (30) of the short circuit breaking device (28) provided in association to the short circuit-relevant system area (22) comprising the at least one on-board power supply system battery (14), wherein the on-board power supply system (12) is connected to an output terminal (24) of a d.c. voltage source (18),
in which process:
- when a short circuit occurs in the area of the short circuit-relevant system area (22) comprising the at least one on-board power supply system battery (14), the short circuit breaking device (28) provided in association to the short circuit-relevant system area (22) comprising the at least one on-board power supply system battery (14) is switched into a disconnected state disconnecting the short circuit-relevant system area (22) comprising the at least one on-board power supply system battery (14) from the on-board power supply system (12) or is in the disconnected state,
- for charging the at least one on-board power supply system battery (14) by means of the d.c. voltage source the at least one MOSFET circuit component (30) of the short circuit breaking device (28) provided in association to the short circuit-relevant system area (22) comprising the at least one on-board power supply system battery (14) is switched into its closed state,
- when a charging current to the at least one on-board power supply system battery (14) is below the current threshold, the at least one MOSFET circuit component (30) of the short circuit breaking device (28) provided in association to the short circuit-relevant system area (22) comprising the at least one on-board power supply system battery (14) is maintained in its closed state and it is switched into its open state when the charging current exceeds the current threshold.

2. Process in accordance with claim 1, **characterized in that** a further short circuit-relevant system area (22) comprises the d.c. voltage source (18).

3. Process in accordance with claim 1 or 2, **characterized in that** the d.c. voltage source (18) comprises a DC/DC converter (20) or a generator.

## Revendications

1. Procédé pour faire fonctionner un système électrique embarqué pour un véhicule, le système électrique embarqué comprenant :
- un système d'alimentation électrique embarqué (12) avec une pluralité de consommateurs d'énergie électrique,
- au moins une batterie du système d'alimentation électrique embarqué (14),
- au moins un dispositif de coupure de court-circuit (28) pour déconnecter une zone du système susceptible d'être mise en court-circuit (22) du système d'alimentation électrique embarqué (12) lorsqu'un court-circuit se produit dans la zone du système susceptible d'être mise en court-circuit (22),
dans lequel ledit au moins un dispositif de coupure de court-circuit (28) comprend au moins un composant de circuit MOSFET (30), dans lequel ledit au moins un composant de circuit MOSFET (30) comporte une borne d'entrée (32) et une borne de sortie (34) et présente une connexion de ligne entre la borne d'entrée (32) et la borne de sortie (34) dans un état fermé et a un effet de blocage dans la direction allant de la borne de sortie (34) vers la borne d'entrée (32) en tant que diode à l'état ouvert,
dans lequel ladite au moins une zone du système susceptible d'être mise en court-circuit (22) comporte une borne de sortie de zone de système (25), et la borne de sortie de zone de système (25) est reliée à la borne d'entrée (32) dudit au moins un composant de circuit MOSFET (30) d'un dispositif de coupure de court-circuit (28), dans lequel une zone du système susceptible d'être mise en court-circuit (22) comprend ladite au moins une batterie du système d'alimentation électrique embarqué (14), et dans lequel une borne de sortie de batterie du système d'alimentation électrique embarqué (16) fournit une borne de sortie de zone du système (25) de la zone du système susceptible d'être mise en court-circuit (22) comprenant ladite au moins une batterie du système d'alimentation électrique embarqué (14) et est reliée à la borne d'entrée (32) dudit au moins un composant de circuit MOSFET (30) d'un dispositif de coupure de court-circuit (28) prévu en association avec la zone du système susceptible d'être mise en court-circuit (22) comprenant ladite au moins une batterie du système d'alimentation électrique embarqué (14),
dans lequel le système d'alimentation électrique embarqué (12) est connecté à la borne de sortie (34) dudit au moins un composant de circuit MOSFET (30) du dispositif de coupure de court-circuit (28) prévu en association avec la zone du système susceptible d'être mise en court-circuit (22) comprenant ladite au moins une batterie du système d'alimentation électrique embarqué (14),
dans lequel le système d'alimentation électrique embarqué (12) est connecté à une borne de sortie (24) d'une source de tension continue (18),
dans lequel procédé:
- lorsqu'un court-circuit se produit dans la région de la zone du système susceptible d'être mise en court-circuit (22) comprenant ladite au moins une batterie du système d'alimentation électrique embarqué (14), le dispositif de coupure de court-circuit (28) prévu en association avec la zone du système susceptible d'être mise en court-circuit (22) comprenant ladite au moins une batterie du système d'alimentation électrique embarqué (14) est commuté dans un état déconnecté déconnectant la zone du système susceptible d'être mise en court-circuit (22) comprenant ladite au moins une batterie du système d'alimentation (14) du système d'alimentation embarqué (12) ou est dans l'état déconnecté,
- pour charger ladite au moins une batterie du système d'alimentation électrique embarqué (14) au moyen de la source de tension continue, ledit au moins un composant de circuit MOSFET (30) du dispositif de coupure de court-circuit (28) prévu en association avec la zone du système susceptible d'être mise en court-circuit (22) comprenant ladite au moins une batterie du système d'alimentation (14) est commuté dans son état fermé,
- lorsqu'un courant de charge vers ladite au moins une batterie du système d'alimentation électrique embarqué (14) est inférieur au seuil de courant, ledit au moins un composant de circuit MOSFET (30) du dispositif de coupure de court-circuit (28) prévu en association avec la zone du système susceptible d'être mise en court-circuit (22) comprenant ladite au moins une batterie du système d'alimentation électrique embarqué (14) est maintenu dans son état fermé et est commuté dans son état ouvert lorsque le courant de charge dépasse le seuil de courant.

2. Procédé selon la revendication 1, **caractérisée en ce qu'**une autre zone du système susceptible d'être mise en court-circuit (22) comprend la source de tension continue (18).

3. Procédé selon la revendication 1 ou 2, **caractérisée en ce que** la source de tension continue (18) comprend un convertisseur CC/CC (20) ou un générateur.
